# EUROPEAN PATENT APPLICATION

(11) **EP 1 903 756 A2**
(43) Date of publication of application: **26.03.2008**
(21) Application number: 07116817.3
(22) Date of filing: 20.09.2007
(51) Int. Cl.: H04M 1/23, H04M 1/725

(54) **Mobile communication terminal for MP3**

(30) Priority: 21.09.2006 KR 20060091720
(71) Applicant: Samsung Electronics Co., Ltd., Suwon-si, Gyeonggi-Do (KR)
(72) Inventor: Kim, Joon-Suh c/o Samsung Electronics Co., Ltd., Gyeonggi-do (KR); Moon, Yeo-Jin c/o Samsung Electronics Co., Ltd., Gyeonggi-do (KR); Lee, Chang-Soo c/o Samsung Electronics Co., Ltd., Gyeonggi-do (KR)
(74) Representative: Zimmer, Franz-Josef

(57) **Abstract**

A mobile communication terminal (100) for Moving Picture Experts Group Layer 3 (MP3). The mobile communication terminal (100) is provided with a plurality of keys (114) and at least one MP3-dedicated key (120).

## Description

The present invention generally relates to a mobile communication terminal, such as a Digital Multimedia Broadcasting (DMB) phone, a game phone, a chatting phone, a camera phone, an MP3 phone, a cellular phone, a Personal Communication System (PCS), a Personal Digital Assistant (PDA), a Hand Held Phone (HHP), etc., and in particular, to a mobile communication terminal for Moving Picture Experts Group Layer 3 (MP3), which is convenient to use in the MP3 mode.

A mobile communication terminal, as used herein, refers to an appliance for use in wireless communication with a counterpart while being carried by a user For example, wireless communication includes voice communication, message transmission, file transmission, image communication, camera function, or the like. In addition, such a mobile communication terminal may also serve as a private secretary for managing phone numbers, private schedules, or the like.

Considering convenient portability, mobile communication terminals are continually becoming more miniaturized, slimmed, light-weighted and adapted to be conveniently gripped and developed toward multimedia appliances capable of implementing more various service functions, for which contents for entertainment including games, recreation, MP3, etc. are regarded as important.

A conventional mobile communication terminal may be classified into a bar-type or a folder-type according to the appearance thereof, considering portability, convenience of use, etc.

A bar-type mobile communication terminal is an appliance with a single housing formed in a bar-type including a display unit, a key pad unit, an antenna device, a receiver unit, a transceiver, etc on its front face. The keypad unit includes 3x4 keys.

A folder-type mobile communication terminal is an appliance with a folder rotatably connected to a bar-type housing via a hinge device in such a manner that the folder is capable of being folded onto the housing. For example, since such a folder-type mobile communication terminal is configured in such a manner that a folder is rotatably connected to a main body via a hinge, in which a key pad unit having 3x4 keys is arranged on the main body and a display is arranged on the folder, which is advantageous in miniaturization and portability of the mobile communication terminal. An example of such a mobile communication terminal is disclosed in U.S. Patent No. 6,865,406, which is assigned to the assignee of the present application, and the contents of which are incorporated herein by reference.

In addition, a conventional mobile communication terminal may be classified into a swing-type or a sliding-type.

A conventional swing-type mobile communication terminal is an appliance with two housings assembled to be opposed to each other, in which one of the two housings is capable of swinging in relation to the other, while being continuously opposed to each other so that the front face of the other housing is opened or closed. The housing capable of swinging is provided with a display unit on the front face thereof, and the other housing is provided with a keypad unit including 3x4 keys on the front face thereof. An example of such a swing-type mobile communication terminal is disclosed in detail in U.S. Patent No. 7,158,37, which is assigned to the assignee of the present application, and the contents of which are incorporated herein by reference.

A conventional sliding-type mobile communication terminal means an appliance with two housings assembled to be opposed to each other, in which one of the two housings is longitudinally slidable so that the front face of the other housing is opened or closed. The slidable housing is provided with a display unit and the other housing is provided with a keypad unit including 3x4 keys. An example of such a sliding-type mobile communication terminal is disclosed in detail in Korean Patent No. 2002-71911, the contents of which are incorporated herein by reference, in which a key pad unit including 3x4 keys is positioned on a main housing and a display unit is provided on a sliding housing.

Some mobile communication terminals may be worn at a certain part of a user's body, for example, at a wrist, a neck, a head or ear(s) at present, or will be done so in the future.

Conventional mobile communication terminals do not have a problem of inconvenience in inputting data or confirming displayed data in the phone mode for voice communication or text message transmission. However, under the circumstance in which the mobile communication terminals are made to be adapted to multimedia, for example, in the MP3 mode, there are problems in using the conventional mobile communication terminals.

At present, mobile communication terminals are developed to have various convergenced functions. As a result, a camera function, an MP3 function, a TV function, an internet function, or the like is frequently provided in mobile communication terminals.

However, in conventional mobile communication terminals, since a key for use in the MP3 mode is positioned at a distance from or adjacent to 3x4 keys which are most frequently used, it is required to carefully operate the key for use in the MP3 mode, which causes inconvenience.

Substantially all the types of conventional mobile communication terminals are configured to be operated in the Ul (user interface) environment so that they can be most conveniently used in the phone mode. However, the U I environment is extremely inferior for certain modes, as well as the MP3 mode, from a standpoint of convenience.

Accordingly, the present invention substantially solves the above-mentioned problems occurring in the prior art. It is the object of the present invention to provide a mobile communication terminal which is convenient to use in the MP3 mode as well as in the phone mode.

This object is solved by the subject matter of the independent claims.

Preferred embodiments are defined in the dependent claims.

An aspect of the present invention is to provide a mobile communication terminal, the operation of which can be conveniently performed in the MP3 mode.

Another aspect of the present invention is to provide a mobile communication terminal, in which an MP3-dedicated key, which can be tactually or visually differentiated from 3x4 keys, is positioned so that the key operation can be conveniently performed in the MP3 mode.

In accordance with an aspect of the invention, there is provided a mobile communication terminal including a plurality of keys and at least one Moving Picture Experts Group Layer 3 (MP3)-dedicated key.

In accordance with another aspect of the invention, the at least one MP3-dedicated key can project a particular height above the plurality of keys, have a color different from that of the plurality of keys, have a material different from that of the plurality of keys, provide tactual differentiation from that of the plurality of keys, provide visual differentiation from that of the plurality of keys, be arranged at a center of a key array, be arranged horizontally.

In accordance with another aspect of the invention, a call key, an end key and at least one 4-way key can be arranged around the plurality of keys, so as to surround the plurality of keys, wherein the plurality of keys can be configured as an array of 3x4 keys, and the array of 3x4 keys can include numeral keys, character keys, a * key, and a # key, at least one four-way key, and an end key.

The above and other aspects, features and advantages of the present invention will be more apparent from the following detailed description taken in conjunction with the accompanying drawings, in which:
FIG. 1 is a front side perspective view showing a mobile communication terminal according to an embodiment of the present invention;
FIG. 2 is a front elevational view corresponding to FIG. 1;
FIG. 3 is a rear side perspective view of the mobile communication terminal of FIG. 1; and
FIG. 4 is a rear elevational view corresponding to FIG. 3.

Preferred embodiments of the present invention are described below with reference to the accompanying drawings. In the following description, the same elements will be designated by the same reference numerals although they are shown in different drawings.

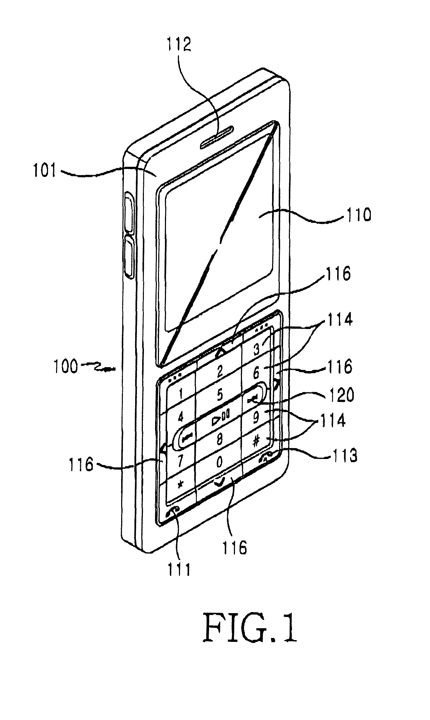

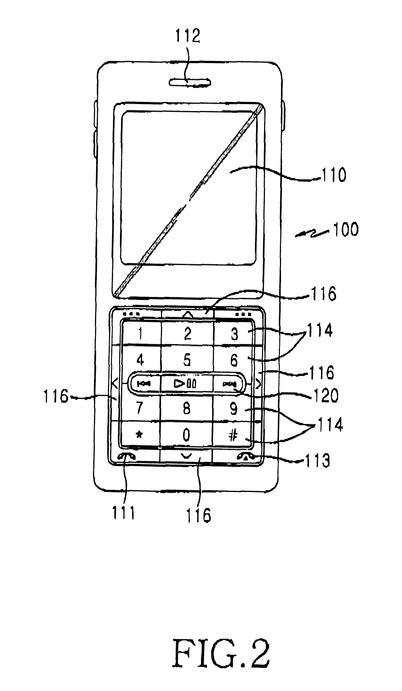

The mobile communication terminal shown in FIGs. 1 and 2 is a bar-type, which can be conveniently used in a Moving Picture Experts Group Layer 3 (MP3) mode as well as in a phone mode. However, it should be appreciated that the present invention is not limited to the bar-type mobile communication terminal and can be employed all the types of mobile communication terminals.

The mobile communication terminal shown in the drawings includes a bar-type body 100, which is provided with a speaker 112, a display unit 110, and a keypad unit on the front face 101 thereof, wherein the keypad unit includes keys 111, 113, 114 and 116 related to the phone mode, and a key related to the MP3 mode. From FIGs. 1 and 2, only the top portions of the keys of the keypad unit can be seen.

The keypad unit includes a plurality of keys and at least one MP3 dedicated key. The keypad example shown in FIG. 1 includes internationally standardized 3x4 keys 114, a call key 111, an end key 113, four-way keys 116, and MP3-dedicated keys 120. According to the present invention, the MP3-dedicated keys 120 are arranged within the array of 3x4 keys. The 3x4 keys 114 include numeral keys, character keys, a * key, a # key, etc.

The MP3-dedicated keys 120 may be configured to project above the 3x4 keys to a particular height so a user can easily operate the MP3-dedicated keys 120 using their sense of touch without seeing the keypad unit.

The MP3-dedicated keys 120 may be formed from a material different from that of the 3x4 keys 114, so that the user can easily differentiate the MP3-dedicated keys 120 from the 3x4 keys 114 using their sense of touch without seeing the keypad unit, thereby easily operating the MP3-dedicated keys 120.

In addition, the MP3-dedicated keys 120 may be arranged at the center of the 3x4 keys 114, so that the user can easily differentiate the MP3-dedicated keys 120 from the 3x4 keys 114 using their sense of touch without seeing the key pad unit, thereby easily operating the MP3-dedicated keys 120.

Furthermore, the MP3-dedicated keys 120 may be formed in a color different from that of the 3x4 keys 114, so the MP-3 dedicated keys 120 are visually differentiated from the 3x4 keys, thereby allowing easy operation of the MP3-dedicated keys 120.

Preferably, the MP-3 dedicated keys 120 include three keys arranged at the center of the 3x4 keys.

In the inventive mobile communication terminal, the MP3-dedicated keys 120 are arranged at the center of the 3x4 keys 114, and the call key 111, the end key 113, and the 4-way keys 116 including four keys are arranged around the 3x4 keys. Therefore, the call key 111, the end key 113, and the four keys of the 4-way keys 116 surround the 3x4 keys.

It is also possible to configure the key pad unit in such a manner that the 3x4 keys 114, the call key 111, the end key 113, and the four keys 116 emit light in the phone mode, while the MP3-dedicated keys 120 emit light in the MP3 mode, whereby the MP3-dedicated keys 120 can be visually differentiated from the surrounding keys in the MP3 mode.

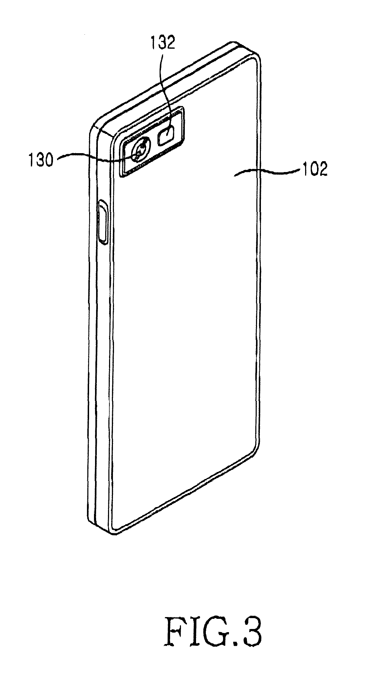

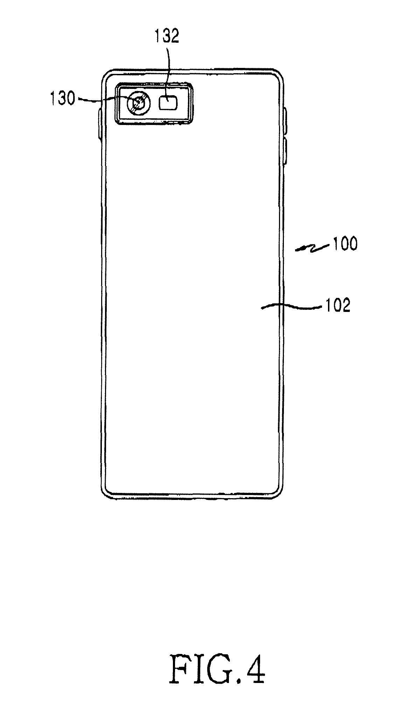

As shown in FIGs. 3 and 4, a camera lens and an illumination apparatus 132 are arranged at a corner area of the rear face 102 of the body.

In conclusion, the inventive mobile communication terminal has at least one more MP3-dedicated key arranged at the center or central area (an area allowing a user to conveniently press the keys) of standardized 3x4 keys, which are most frequently used, wherein the MP3-dedicated keys may project above the 3x4 keys, the MP3-dedicated keys may be formed from a material different from that of the 3x4 keys, or the MP3-dedicated keys may be formed in a color different from that of the 3x4 keys, so that the user can conveniently operate the keys in the MP3 mode. The MP3-dedicated keys provide tactual and visual differentiation from other keys on the mobile communication terminal.

As described above, the inventive mobile communication terminal is convenient to use in the MP3 mode, as well as in the phone mode. In particular, according to the present invention, the key pressing operation can be more conveniently performed in the MP3 mode. Furthermore, because the key pressing operation is capable of being conveniently performed by tactually or visually differentiating the MP3-dedicated keys from the other keys, the Ul environment can be improved for the MP3 mode.

While the invention has been shown and described with reference to certain preferred embodiments thereof, it will be understood by those skilled in the art that various changes in form and details may be made therein without departing from the scope of the invention as defined by the appended claims.

## Claims

1. A mobile communication terminal comprising a plurality of keys and at least one MP3-dedicated key.

2. The mobile communication terminal according to claim 1, wherein the at least one MP3-dedicated key projects a particular height above the plurality of keys.

3. The mobile communication terminal according to claim 1 or 2, wherein the at least one MP3-dedicated key has a color different from that of the plurality of keys.

4. The mobile communication terminal according to one of claims 1 to 3, wherein the at least one MP3-dedicated key is of a material different from that of the plurality of keys.

5. The mobile communication terminal according to one of claims 1 to 4, wherein the at least one MP3-dedicated key provides tactual differentiation from that of the plurality of keys.

6. The mobile communication terminal according to one of claims 1 to 5, wherein the at least one MP3-dedicated key provides visual differentiation from that of the plurality of keys.

7. The mobile communication terminal according to one of claims 1 to 6, wherein the at least one MP3-dedicated key is arranged at a center of a key array.

8. The mobile communication terminal according to one of claims 1 to 6, wherein a plurality of MP3-dedicated keys are arranged horizontally.

9. The mobile communication terminal according to one of claims 1 to 6, wherein a call key, an end key and at least one 4-way key are arranged around the plurality of keys, so as to surround the plurality of keys.

10. The mobile communication terminal according to one of claims 1 to 6, wherein the plurality of keys are configured as an array of 3x4 keys.

11. The mobile communication terminal according to claim 10, wherein the array of 3x4 keys include numeral keys, character keys, a * key, and a # key.

12. The mobile communication terminal according to one of claims 1 to 11, wherein the plurality of keys include at least one four-way key.

13. The mobile communication terminal according to one of claims 1 to 12, wherein the plurality of keys include an end key.
